# EUROPÄISCHE PATENTANMELDUNG

(11) **EP 2 469 079 A2**
(43) Veröffentlichungstag der Anmeldung: **27.06.2012**
(21) Anmeldenummer: 11194655.4
(22) Anmeldetag: 20.12.2011
(51) Int. Cl.: F03D 7/02, F03D 11/00

(54) **Bremssystem mit Überwachungseinrichtung**

(30) Priorität: 21.12.2010 DE 102010055336
(71) Anmelder: Baumer Innotec AG, 8501 Frauenfeld (CH)
(72) Erfinder: Weigel, Michael, 88142 Wasserburg (DE); Tiedeke, Joachim, 8280 Kreuzlingen (CH)
(74) Vertreter: Strauss, Steffen

(57) **Zusammenfassung**

Die Erfindung betrifft ein Bremssystem umfassend eine mechanisch mittels Reibung wirksame Bremsvorrichtung, mit zumindest einem Bremsbelag und einem Bremsbelagträger, einem Mittel zur Erfassung der Temperatur am Bremsbelag oder am Bremsbelagträger, einem Mittel zur Erfassung einer Betätigung und eines Lösens der Bremsvorrichtung und Erzeugung eines Bremsbetätigungssignals und einem Überwachungsmodul zur Überwachung der Funktionsfähigkeit der Bremsvorrichtung, wobei mit dem Überwachungsmodul wenigstens eine Änderung des Bremsbetätigungssignals mit einer Temperaturänderung an dem Bremsbelag oder an dem Bremsbelagträger vergleichbar ist und wobei von dem Überwachungsmodul unmittelbar nach der Betätigung der Bremsvorrichtung und einer gleichbleibenden oder abfallenden Temperatur an dem Bremsbelag oder an dem Bremsbelagträger oder unmittelbar nach dem Lösen der Bremsvorrichtung bei einer gleichbleibenden oder steigenden Temperatur an dem Bremsbelag oder an dem Bremsbelagträger ein Fehlersignal erzeugbar ist.

Ferner umfasst die Erfindung ein Verfahren zur Überwachung eines Bremssystems.

## Beschreibung

### Gebiet der Erfindung

Die Erfindung bezieht sich auf ein mechanisches, auf Reibung basierendes Bremssystem mit einer Überwachungseinrichtung. Insbesondere bezieht sich die Erfindung auf ein Bremssystem für Windkraftanlagen.

### Hintergrund der Erfindung

Mechanisch arbeitende Reibungsbremsen sind bekannt. Es handelt sich dabei insbesondere um Scheibenbremsen, bei denen eine rotierende Bremsscheibe von in der Regel zwei hydraulisch betätigten Bremsbelegen abgebremst wird.

Derartige Bremssysteme werden insbesondere auch bei Windkraftanlagen verwendet. Bei Windkraftanlagen gibt es typischerweise zwei Bremsanlagen, nämlich sogenannten Yaw-Drive Bremsen und Rotorbremsen.

Yaw-Drive Bremsen sind Bremsanlagen, die verhindern, dass sich die Gondel unerwünscht verdrehen kann. Rotorbremsen haben die Aufgabe, den Rotor bis zum Stillstand abzubremsen, insbesondere im Falle einer Notabschaltung aufgrund eines Defektes in der Anlage oder aufgrund der Überschreitung einer maximal zulässigen Windgeschwindigkeit. Rotorbremsen sind daher als besonders sicherheitsrelevant eingesetzt.

Bei derartigen Bremsanlagen kann es zu verschiedenen Fehlern und Funktionsausfällen kommen.

Beispielsweise können die Bremsbeläge im Betrieb an der Bremsscheibe schleifen. Dies kann insbesondere der Fall sein, wenn der Hydraulikzylinder aufgrund eines Defektes schwergängig ist. In der Folge kommt es zu einer Temperaturerhöhung und übermäßigen Abnutzung, die dazu führen kann, dass die Bremse nicht mehr funktioniert.

Weiter kann es, insbesondere nach längerer Nichtbenutzung der Bremsanlage, dazu kommen, dass sich die Bremsklötze beim Betätigen nicht bewegen. Dies kann insbesondere auftreten, wenn die Hydraulikzylinder festsitzen. Umgekehrt kann es auch dazu kommen, dass die Bremsklötze sich nicht lösen. Weiter kann es zu Problemen im Hydrauliksystem kommen, insbesondere dass kein Druck aufgebaut wird oder der Druck so hoch ist, dass die Gefahr der Beschädigung des Hydrauliksystems besteht.

Ein weiteres Problem ist die Kontrolle der Belagstärke der Bremsanlage. Hierzu werden im Regelfall Mikroschalter verwendet oder Drähte, welche in den Bremsbelag eingesintert oder am Bremsbelag angebracht sind. Diese werden beim Erreichen einer Mindestbelagstärke zerstört insbesondere durchgescheuert, so dass ein elektrischer Kreis geöffnet oder geschlossen wird. Damit kann eine Warnmeldung wegen abgenutzten Bremsbelägen ausgegeben werden kann. Zu diesem Zeitpunkt ist der Bremsbelag aber schon sehr stark abgenutzt und muss möglichst umgehend erneuert werden. Wird der Austausch nicht durchgeführt, wird die Anlage so lange weiter betrieben, bis die Beläge ganz abgenutzt sind. Hierdurch wird die Bremsanlage beschädigt und eine Notabschaltung ist aufgrund fehlender Bremsleistung eventuell nicht mehr möglich.

Insbesondere an Bremsen für Windkraftanlagen wird eine höhere hohe Belastbarkeit und grosse Zuverlässigkeit gestellt. Außerdem müssen diese Bremsen ihre Arbeit vollautomatisch in normalerweise unbemannten Anlagen verrichten; meist an abgelegenen Orten die zur Instandhaltungszwecken nur unter Schwierigkeiten und hohem finanziellem Aufwand erreichbar sind.

### Aufgabe der Erfindung

Der Erfindung liegt demgegenüber die Aufgabe zugrunde, ein Bremssystem bereitzustellen, bei welchem die Sicherheit verbessert wird.

### Zusammenfassung der Erfindung

Die Aufgabe der Erfindung wird bereits durch ein Bremssystem nach einem der unabhängigen Ansprüche gelöst.

Bevorzugte Ausführungsformen und Weiterbildungen der Erfindung sind den jeweiligen Unteransprüchen zu entnehmen.

Die Erfindung betrifft ein Bremssystem, welches insbesondere für eine Windkraftanlage ausgebildet ist. Das Bremssystem umfasst eine mechanisch mittels Reibung wirksame Bremsvorrichtung, welche zumindest einen Bremsbelag und einen Bremsbelagträger umfasst.

Insbesondere betrifft die Erfindung eine hydraulisch betätigbare Scheibenbremse, bei welcher eine rotierende Bremsscheibe von in der Regel gegenüberliegenden Bremsbelegen, die über eine Hydraulik betätigt werden, abgebremst wird.

Gemäß der Erfindung umfasst das Bremssystem Mittel zur Erfassung der Temperatur am Bremsbelag oder am Bremsbelagträger, Mittel zur Erfassung einer Betätigung und eines Lösens der Bremsvorrichtung und Erzeugung eines Bremsbetätigungssignals und ein Überwachungsmodul zur Überwachung der Funktionsfähigkeit der Bremsvorrichtung. Mit dem Überwachungsmodul ist wenigstens eine Änderung des Bremsbetätigungssignals mit einer Temperaturänderung an dem Bremsbelag oder an dem Bremsbelagträger vergleichbar. Ferner ist von dem Überwachungsmodul unmittelbar nach der Betätigung der Bremsvorrichtung und einer gleichbleibenden oder abfallenden Temperatur an dem Bremsbelag oder an dem Bremsbelagträger oder unmittelbar nach dem Lösen der Bremsvorrichtung bei einer gleichbleibenden oder steigenden Temperatur an dem Bremsbelag oder an dem Bremsbelagträger ein Fehlersignal erzeugbar.

Das Betätigen und das Lösen der Bremsvorrichtung kann hierbei direkt oder indirekt erfassbar sein. In vorteilhafter Weise ist als Mittel zur Erfassung einer Betätigung und eines Lösens der Bremsvorrichtung ein Drucksensor vorgesehen. Insbesondere bei einer hydraulischen Bremse ist das Überwachungsmodul mit einen Hydraulikanschluss und einer Druckzelle zur Messung des Hydraulikdrucks ausgeführt.
Es kann dabei eine bekannte Standarddruckzelle mit passendem Anschluss verwendet werden, welche in dem Überwachungsmodul angebracht ist und welche über einen Anschluss mit der Hydraulik verbunden wird.

Weiterhin ist auch denkbar, dass das Überwachungsmodul im Druckbereich der Hydraulik eingebaut wird und so bereits unmittelbar eine Verbindung mit der Hydraulik vorhanden ist.

Alternativ oder parallel dazu kann als Mittel zur Erfassung einer Betätigung und eines Lösens der Bremsvorrichtung ein Kraftsensor vorgesehen sein. Ferner kann als Mittel zur Erfassung einer Betätigung und eines Lösens der Bremsvorrichtung ein elektrisches Signal eines Betätigungselementes vorgesehen sein.
Der Betätigungszustand der Bremse kann dem Überwachungsmodul über eine elektrische Schnittstelle signalisiert werden. Dies ist insbesondere für die Überwachung des Bremsdrucks nötig, kann aber auch anstatt der Drucküberwachung der Bremshydraulik verwendet werden.

In einer bevorzugten Ausführung ist das Überwachungsmodul an der Bremsvorrichtung angeordnetes, wobei das Überwachungsmodul einen am Bremsbelag oder Bremsbelagträger anliegenden beweglichen Tastkopf aufweist. Unter einem Tastkopf wird ein beliebig gestalteter Fühler verstanden, welcher beweglich am Überwachungsmodul angeordnet ist. Das Mittel zur Erfassung der Temperatur ist als ein Temperatursensor ausgebildet und vorzugsweise an dem beweglichen Tastkopf angebracht. Das Überwachungsmodul ist vorzugsweise an den beweglichen Teil der Bremsvorrichtung und angrenzend an den Bremsbelag oder Bremsbelagträger angeordnet. Insbesondere ist der Tastkopf als Stift ausgebildet, welcher mittels einer Feder, die vorzugsweise im Gehäuse des Überwachungsmoduls angeordnet ist, gegen den Bremsbelag oder Bremsbelagträger gedrückt wird.

Über den Tastkopf kann, wie im Folgenden noch im Detail dargestellt, direkt die Temperatur am Bremsbelag bzw. indirekt mittels der Temperatur an dem Bremsbelagträger in der Nähe des Belages erfasst und so dem Überwachungsmodul übermittelt werden. Insbesondere befindet sich der Temperatursensor in etwa an der Spitze des Tastkopfes, um den heißen Teilen der Bremsanlage möglichst nahe zu sein.

Sofern der Tastkopf über eine Federeinrichtung gegen den Belagträger oder den Belag gedrückt wird, ist darüber hinaus eine besonders gute thermische Ankopplung gewährleistet.

Über die Messung der Temperatur kann beispielsweise diagnostiziert werden, ob eine Bremsanlage im nicht betätigten Zustand schleift. Weiter kann vorgegeben sein, dass bei Erreichen einer Temperaturgrenze zunächst eine Warnmeldung generiert wird und/oder bei einem Überschreiten einer weiteren Temperaturgrenze die Anlage notabgeschaltet wird.

In einer weiteren Ausführung des erfindungsgemässen Bremssystems weist das Überwachungsmodul einen Abstandssensor auf. Vorzugsweise ist ein induktiver Abstandssensor vorgesehen. Mit dem Abstandssensor ist eine Verschiebung des Bremsbelags oder des Bremsbelagträgers erfassbar ist. Über den Abstandssensor und die damit verbundene Bestimmung der Position des Belages kann zum Einen, wie bereits dargestellt, die Belagstärke gemessen werden. Zum Anderen ist es auch möglich, die Verschiebung des Belages während eines Bremsvorganges zu messen.

Über das Überwachungsmodul kann somit nicht nur kontrolliert werden, dass der Bremsbelag verschlissen ist, sondern über den Tastkopf lässt sich beispielsweise anhand der Position des Belages bei betätigter Bremse die jeweilige Belagstärke erfassen, so dass beispielsweise noch einige Zeit vor Erreichen der Verschleißgrenze angezeigt werden kann, dass ein Bremsbelagwechsel demnächst fällig wird. Auch kann erkannt werden, wann der Belag nahezu vollständig abgenutzt ist und in diesem Fall eine Notabschaltung vorgenommen werden.

In einer weiteren Ausführung kann eine Auswerteeinheit vorgesehen sein, welches Mittel zum Vergleich der Verschiebung des Bremsbelags oder des Bremsbelagträgers mit einem Referenzwert aufweist. Ferner können mit der Auswerteeinheit zumindest zwei Warngrenzen ausgebbar sein. Das Bremssystem kann weiter Mittel zur Alarmierung an einer Anlage, insbesondere an einer Windkraftanlage und / oder Mittel zur Notabschaltung der Anlage aufweisen, wobei wenigstens aus dem Fehlersignal ein Alarmsignal erzeugbar ist und vorzugsweise bei Vorhandensein des Fehlersignals die Anlage abschaltbar ist.

In Verbindung mit einer Druckmessung, vorzugsweise im Hydraulikbereich, kann ein Druckverlauf über eine Zeit aufgenommen werden, welcher mit einem Soll-Wert vergleichbar ist.

Weiter kann ein Druckverlauf über eine Verschiebung des Bremsbelages und somit des Bremsbelagträgers aufgenommen werden, welcher mit einem Soll-Wert eines Druck/Verschiebungsverlaufs vergleichbar ist.

Verschiebt sich der Bremsbelag bei hinreichendem Bremsdruck und/oder Betätigung der Bremsanlage, signalisiert durch die elektrische Schnittstelle, nicht ausreichend, kann daraus geschlossen werden, dass ein mechanischer Defekt, beispielsweise in Form einer Schwergängigkeit der Bremszylinder vorliegt.
Bei einer Ausführungsform der Erfindung wird die Verschiebung gemessen, indem der Tastkopf mit einem Keil verbunden ist. Unter einem Keil wird ein beliebiges Bauteil verstanden, dessen Durchmesser sich entlang einer Längserstreckungsrichtung ändert. Beispielsweise wird unter einem Keil auch die Form eines Kegelabschnitts verstanden.

Über ein korrespondierend zum Keil angebrachten Abstandssensor, beispielsweise einen induktiven Sensor, wird der Abstand zum Keil gemessen. Der Abstand zum Keil korrespondiert, entsprechend der Steigung des Keils, mit der Verschiebung des Tastkopfes. Eine derartige Distanzmessung lässt sich besonders kompakt in einem Gehäuse vorzugsweise in dem Gehäuse des Überwachungsmoduls integrieren. Es versteht sich dabei, dass je nach Steigung des Keils eine unterschiedliche Übersetzung vorliegt. Je nach geforderter Genauigkeit und/oder Messbereich kann daher ein flacherer oder steilerer Keil gewählt werden.

Das Überwachungsmodul weist vorzugsweise eine elektrische Schnittstelle auf, mit der es mit einer Auswerteeinrichtung verbunden ist.

Bei einer Ausführungsform der Erfindung können die Sensordaten direkt an die Auswerteeinrichtung weiter übertragen und dort weiterverarbeitet werden. Die Auswerteeinrichtung kann beispielsweise die Anlagensteuerung oder ein Display umfassen, in welchem Überwachungs- und Warnmeldungen angezeigt werden. Ferner ist auch denkbar, die Auswerteeinrichtung als Personalcomputer auszubilden. Insbesondere kann auch die Überwachung über ein Netzwerk erfolgen, beispielsweise über das Internet können über eine Webseite die Daten des Überwachungsmoduls zugänglich gemacht werden.

Es ist auch denkbar, einen Teil der Auswertung oder die gesamte Auswertung in einer Elektronik im Überwachungsmodul selbst durchzuführen. Ein solches Überwachungsmodul kann beispielsweise eine drahtlose Schnittstelle wie W-LAN oder GSM umfassen, über das Betriebszustände an eine zentrale Leitstelle drahtlos übertragen werden. Auch ist denkbar, dass das Überwachungsmodul selbst, insbesondere wenn es über eine GSM-Verbindung angekoppelt ist, nur bei einem kritischen Betriebszustand eine Verbindung zu einer Leitstelle herstellt. Auch über eine Stromleitung, in die von der Windkraftanlage Strom eingespeist wird, könnte eine Datenverbindung herstellt werden.
Weiter weist gemäß der Erfindung das Bremssystem eine Auswerteeinrichtung auf, die zumindest zwei Warngrenzen ausgibt.

Das erfindungsgemäße Bremssystem ist also derart ausgebildet, dass es nicht nur eine Warngrenze, beispielsweise bei Erreichen der Verschleißgrenze des Bremsbelages gibt, sondern dass vorher eine weitere Warnmeldung generiert wird, beispielsweise bei einem Abnutzungsgrad des Bremsbelages von 70% oder bei Erreichen einer unüblich hohen Temperatur, ohne dass ein kritischer Betriebszustand erreicht ist.

So wird der Nutzer über den Zustand des Bremssystems bereits informiert, bevor kritische Betriebszustände, die eine Abschaltung oder eine sofortige Wartung des Systems erforderlich machen, erreicht sind.

Die kritischere Warnstufe kann dagegen beispielsweise eine automatische Notabschaltung der Anlage herbeiführen oder in einer Leitzentrale ein Alarmsignal auslösen.

Das erfindungsgemässe Verfahren zur Überwachung eines Bremssystems, insbesondere für eine Windkraftanlage, mit einer mechanischen mittels Reibung wirksame Bremsvorrichtung, mit zumindest einem Bremsbelag und einem Bremsbelagträger weist die folgenden Verfahrensschritten auf:
- Erfassung der Temperatur am Bremsbelag oder am Bremsbelagträger;
- Erfassung einer Betätigung und eines Lösens der Bremsvorrichtung;
- Erzeugung eines Bremsbetätigungssignals;
- Vergleich einer Änderung des Bremsbetätigungssignals mit einer Temperaturänderung an dem Bremsbelag oder an dem Bremsbelagträger;
- Erzeugung eines Fehlersignals falls unmittelbar nach der Betätigung der Bremsvorrichtung eine gleichbleibende oder abfallende Temperatur an dem Bremsbelag oder an dem Bremsbelagträger oder falls unmittelbar nach dem Lösen der Bremsvorrichtung eine gleichbleibende oder steigende Temperatur an dem Bremsbelag oder an dem Bremsbelagträger erkennbar ist.

In einem weiteren vorteilhaften Verfahrensschritt wird eine Verschiebung des Bremsbelags oder des Bremsbelagträgers erfasst und über ein Zeitintervall ausgewertet. Dabei wird ein weiteres Fehlersignal erzeugt, falls in einem Druckintervall die Verschiebung des Bremsbelags oder des Bremsbelagträgers nicht einem Erwartungsbereich entspricht.

### Beschreibung der Zeichnungen

### Kurzbeschreibung der Zeichnungen

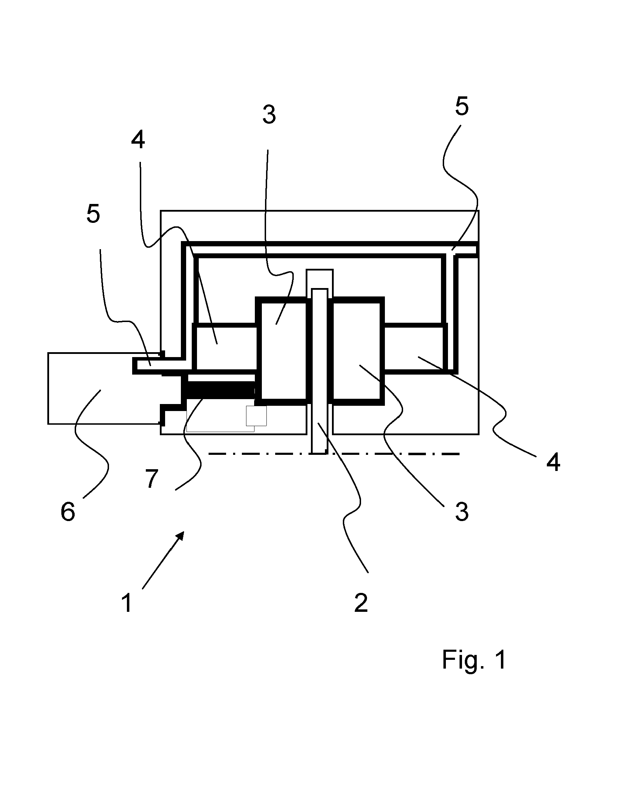

Die Erfindung soll im Folgenden bezugnehmend auf die Zeichnungen Fig. 1 bis Fig. 9 näher erläutert werden.

Fig. 1 zeigt ein schematisch dargestelltes Bremssystem gemäß einer Ausführungsform der Erfindung.

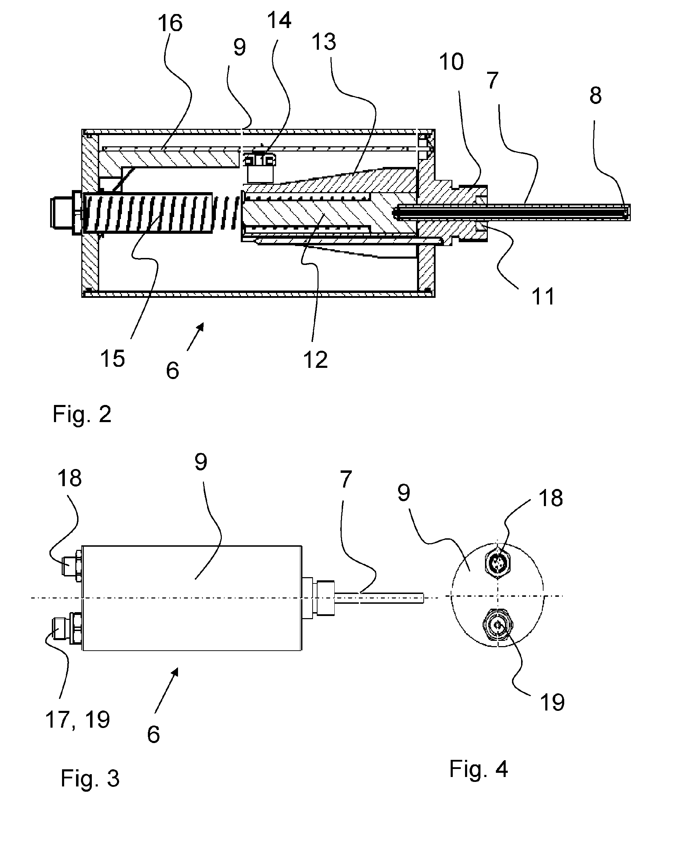

Bezugnehmend auf Fig. 2 bis Fig. 4 sollen Details eines Überwachungsmoduls anhand eines schematisch dargestellten Ausführungsbeispiels näher erläutert werden.

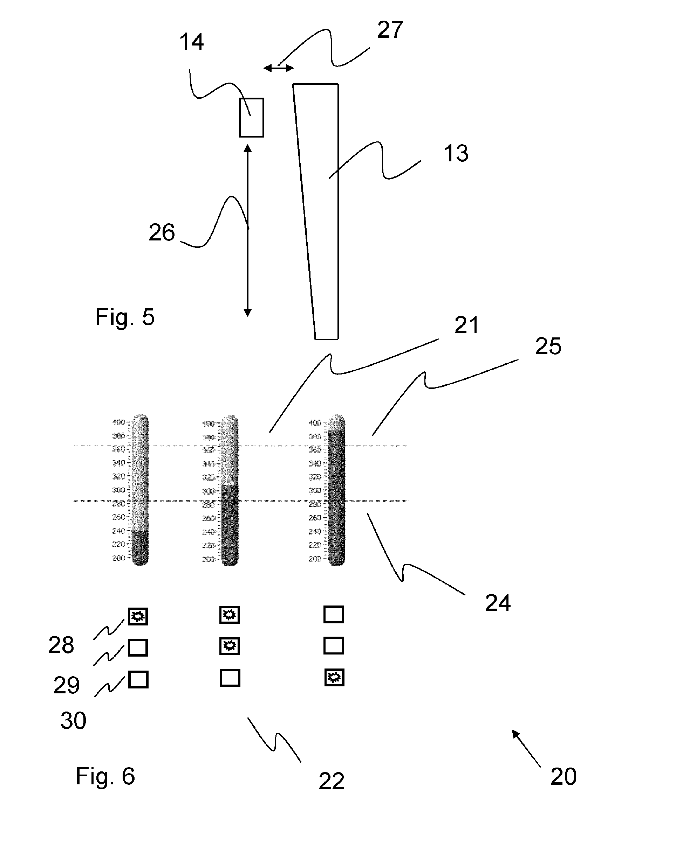

Bezugnehmend auf Fig. 5 soll das Prinzip der Verschiebungsmessung des Bremsbelags erläutert werden.

Fig. 6 bis Fig. 8 zeigt jeweils ein Display einer Auswerteeinrichtung eines erfindungsgemäßen Bremssystems in unterschiedlichen Betriebszuständen.

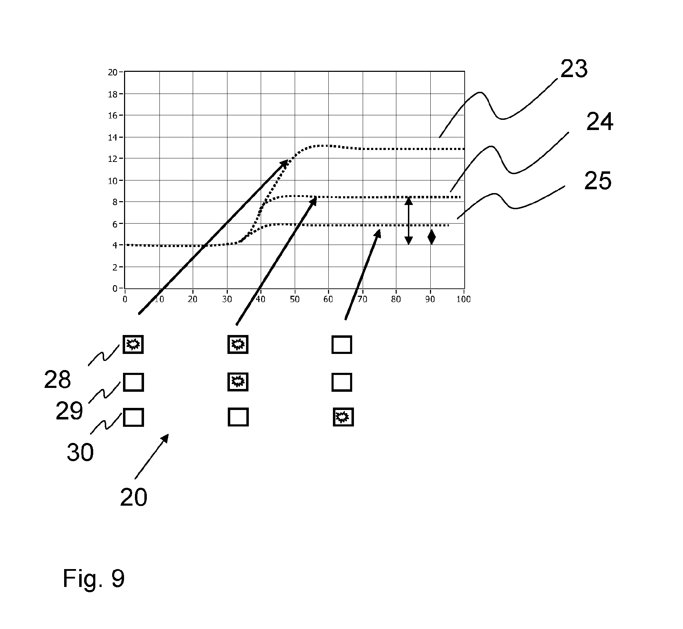

Bezugnehmend auf Fig. 9 soll die Aufnahme einer Druck/Verschiebungsmessung erläutert werden.

### Detaillierte Beschreibung der Zeichnungen

Fig. 1 zeigt, schematisch dargestellt, das Prinzip eines Ausführungsbeispiels eines erfindungsgemäßen Bremssystems.

Dargestellt in diesem Ausführungsbeispiel ist ein Bremssystem 1, welches als Scheibenbremse ausgebildet ist.

Das Bremssystem 1 umfasst dementsprechend eine rotierende Bremsscheibe 2.

Die Bremsscheibe 2 wird mittels zweier Bremsbeläge 3, welche in einem Träger (nicht dargestellt) sitzen, abgebremst. Hierfür ist jeweils ein Hydraulikzylinder 4 vorgesehen. Der Hydraulikzylinder 4 ist über Hydraulikleitungen 5 mit einer Betätigungseinrichtung (nicht dargestellt) verbunden.

Das Bremssystem 1 umfasst des Weiteren ein Überwachungsmodul 6. Das Überwachungsmodul 6 ist zur Drucküberwachung mit den Hydraulikleitungen 5 verbunden. Dafür weist das Überwachungsmodul 6 einen Hydraulikanschluss und eine Druckzelle zur Messung des Hydraulikdrucks auf (nicht dargestellt). Die Druckzelle umfasst einen Drucksensor als Mittel zur Erfassung einer Betätigung und eines Lösens der Bremsvorrichtung (nicht dargestellt). Ein Betätigen und ein Lösen der Bremsvorrichtung sind somit indirekt über eine Änderung des Drucks in der Bremshydraulik erfassbar.

In diesem Ausführungsbeispiel umfasst das im Wesentlichen zylindrisch ausgebildete Gehäuse zusätzlich einen beweglichen Tastkopf 7, welcher gegen die Rückseite des Bremsbelags 3 bzw. Bremsbelagträgers gedrückt wird.

Über den Tastkopf 7 kann somit die Position des Bremsbelags 3 bestimmt werden.

Weiter umfasst der Tastkopf einen Temperatursensor (nicht dargestellt), mit dem die Temperatur am Bremsbelag 3 gemessen wird. Die Temperatur des Bremsbelages 3 kann alternativ auch indirekt über die Temperatur am Bremsbelagträger (nicht dargestellt) erfasst werden. Nachdem die Temperatur am Bremsbelag oder am Bremsbelagträger erfasst und eine Betätigung oder ein Lösens der Bremsvorrichtung erkannt und ein entsprechendes Bremsbetätigungssignal erzeugt wurde, erfolgt ein Vergleich einer Änderung des Bremsbetätigungssignals mit einer Temperaturänderung an dem Bremsbelag oder an dem Bremsbelagträger. Dieser Vergleich kann in dem Überwachungsmodul 6 erfolgen. Von dem Überwachungsmodul 6 wird ein Fehlersignals erzeugt, falls unmittelbar nach der Betätigung der Bremsvorrichtung eine gleichbleibende oder abfallende Temperatur an dem Bremsbelag 3 oder an dem Bremsbelagträger oder falls unmittelbar nach dem Lösen der Bremsvorrichtung eine gleichbleibende oder steigende Temperatur an dem Bremsbelag 3 oder an dem Bremsbelagträger erkennbar ist. Somit kann in vorteilhafter Weise eine Funktionsbeeinträchtigung an dem Bremssystem 1 zuverlässig und schnell erkannt werden.

Fig. 2 zeigt, schematisch dargestellt, eine Schnittansicht eines Ausführungsbeispiels eines Überwachungsmoduls 6.

Das Überwachungsmodul 6 umfasst in diesem Ausführungsbeispiel ein im Wesentlichen zylinderförmiges Gehäuse 9 aus welchem der in diesem Ausführungsbeispiel stangenartige Tastkopf 7 herausragt. Im Tastkopf 7 ist stirnseitig ein Temperatursensor 8 angeordnet.

Der Tastkopf 7 ragt aus einem Flansch 10 hervor, mittels dessen das Überwachungsmodul an der Bremsvorrichtung befestigt wird. Um das Eindringen von Staub und Feuchtigkeit zu verhindern, ist der Tastkopf 7 am Flansch 10 mittels einer Dichtung 11 abgedichtet. Weiter ist auch denkbar, das Überwachungsmodul im Druckbereich einzubauen, der Flansch 10 kann hierfür eine Nut für eine weitere Dichtung umfassen.

Der Tastkopf ist mit einem im Gehäuse angeordneten Halter 12 verbunden und wird mittels einer Feder 15 nach vorne und damit gegen die Rückseite des Bremsbelages oder Belagträgers (nicht dargestellt) gedrückt.

Weiter ist der Tastkopf 7 mit einem im Gehäuse angeordneten Keil 13, hier ausgebildet als Kegelstumpf, welcher auch einteilig mit dem Tastkopfhalter 12 verbunden sein kann, verbunden.

An der Innenwand des Gehäuses 9 ist gegenüber dem Keil 13 ein induktiver Sensor 14 angeordnet, mittels dessen der Abstand zum Keil 13 gemessen wird. Bewegt sich nun der Tastkopf 7 und damit der Keil 13 nach hinten, verringert sich aufgrund der Neigung des Keils 13 der Abstand zum induktiven Sensor und es kann so in einer sehr kompakten Baugruppe mittels des induktiven Sensors 14 eine Verschiebung des Bremsbelags bestimmt werden.

Der induktive Sensor 14 ist auf einer Platine 16 angeordnet, welche auch mit dem Temperatursensor 8 verbunden ist.

Weiter ist die Platine mit einer Druckzelle 17 verbunden, welche mit dem Hydrauliksystem der Bremsanlage (nicht dargestellt) verbunden ist.

Über die Druckzelle 17 kann der Druck im Hydrauliksystem gemessen werden und so überwacht werden, ob nach der Betätigung der Bremsvorrichtung eine gleichbleibende oder abfallende Temperatur an dem Bremsbelag 3 oder an dem Bremsbelagträger oder falls unmittelbar nach dem Lösen der Bremsvorrichtung eine gleichbleibende oder steigende Temperatur an dem Bremsbelag 3 oder an dem Bremsbelagträger erkennbar ist. Erkennt das Überwachungsmodul 6 einen dieser Zustände, wird von dem Überwachungsmodul 6 ein Fehlersignal ausgegeben.

Ferner kann zusätzlich von dem Überwachungsmodul 6 überwacht und erkannt werden, ob ein hinreichend hoher Druck aufgebaut wird und trotz hinreichenden Drucks sich der Bremsbelag nicht hinreichend vorschiebt.

Fig. 3 zeigt das in Fig. 2 dargestellte Überwachungsmodul in einer Seitenansicht.

Zu erkennen ist, dass das Überwachungsmodul 6 ein Gehäuse 9 mit zwei Anschlüssen 18, 19 aufweist.

Es handelt sich dabei um eine elektrische Schnittstelle 18, über die die Sensordaten an eine Auswerteeinheit weitergegeben werden, und die Betätigung der Bremse dem Überwachungsmodul signalisiert wird.

Weiter hat das Überwachungsmodul 6 in diesem Ausführungsbeispiel rückseitig einen Anschluss 19 für eine Hydraulikleitung, welcher mit der Hydraulik des Bremssystems verbunden wird und über den so der Druck im Hydrauliksystem gemessen werden kann und wie vorstehend ausgeführt ein Drucksensor indirekt als ein Mittel zur Erfassung einer Betätigung und eines Lösens der Bremsvorrichtung dient und von dem Drucksensor und/oder dem Überwachungsmodul ein Bremsbetätigungssignal erzeugbar ist.

Bei einer alternativen Ausführungsform der Erfindung ist auch denkbar, das Überwachungsmodul im Druckbereich einzubauen, wobei dann vorzugsweise auf der Seite des Tastkopfes 7 die Druckmessung integriert ist (nicht dargestellt).

Fig. 4 zeigt das in Fig. 2 und Fig. 3 dargestellte Überwachungsmodul von der Rückseite.

Zu erkennen ist die kreiszylinderförmige Ausgestaltung des Gehäuses 9. Weiter zu erkennen ist die elektrische Schnittestelle 18 und der Hydraulikanschluss 19.

Bezugnehmend auf Fig. 5 soll das vorteilhafte Messprinzip der zusätzlichen Verschiebungsmessung des Belags erläutert werden.

Das Messprinzip beruht darauf, dass ein Keil 13 mit dem Tastkopf (7 in Fig. 2) verbunden ist und über einen induktiven Sensor 14 der Abstand zum Keil gemessen wird. Der Abstand des induktiven Sensors 14 zum Keil 13 ist bei einer Verschiebung des Keils 13 proportional zu der Verschiebung. Der Proportionalitätsfaktor hängt dabei von der Steigung des Keils ab. Die in dieser schematischen Ansicht dargestellte relativ geringe Steigung des Keils 13 resultiert in einem recht großen Übersetzungsverhältnis, d.h. die Abstandsänderung zwischen Sensor 14 und Keil 13 ist erheblich kleiner als die Verschiebung des Tastkopfes. Dies ermöglicht eine besonders kompakte Ausgestaltung, reduziert aber die Messgenauigkeit. Ersichtlich ist daher, dass zur Erhöhung der Messgenauigkeit auch der Keil steiler ausgebildet sein kann.

Bezugnehmend auf Fig. 6 soll die Generierung eines Alarmsignals im erfindungsgemäßen Bremssystem näher erläutert werden. Das hier dargestellte Display 20 kann sowohl eine logische Repräsentation der Steuerungsfunktion darstellen, als auch eine konkrete Umsetzung sein.

Das Display 20 kann beispielsweise das Display einer eingebauten Überwachungs- und Auswerteeinrichtung sein. Weiter kann das Display 20 auch Teil einer webbasierten Internetseite sein, über die Windkraftanlagen überwacht werden.

Zu erkennen ist in dem Display 20 eine Temperaturanzeige 21, mittels der die Temperatur des Bremsbelages erfasst wird. In dem dargestellten Beispiel wird die Temperatur des Bremsbelages in °C erfasst.

In diesem Ausführungsbeispiel sind eine Warngrenze 24 bei 285°C und eine Alarmgrenze 25 bei 365°C gezeigt.

Unterhalb der Temperaturanzeige befindet sich eine Signalampel 22, die den Zustand 28 "Bremse OK", den Zustand 29 "Warnung" und den Zustand 30 "Alarm" kennt. Es versteht sich, dass, je nach Ausführungsbeispiel, auf die Temperaturanzeige 21 auch verzichtet werden kann und nur eine Signalampel 22 vorgesehen sein kann.

Bei unter 285°C wird signalisiert, dass die Bremse in Ordnung ist.

Bei einer Temperatur von über 285°C wird über ein gelbes Signal signalisiert, dass die Temperatur der Bremsanlage einen unerwartet hohen Wert erreicht hat. Dies kann beispielsweise darauf zurückzuführen sein, dass ein Hydraulikzylinder schwergängig ist und der Bremsbelag daher auch im gelösten Zustand an der Bremsscheibe schleift. Bei einer Temperatur zwischen 285°C und 365°C ist eine hinreichende Bremsleistung aber weiterhin sichergestellt. Die Warnung dient somit in erster Linie dazu, den Benutzer zu informieren, dass die Anlage überprüft werden muss.

Bei Erreichen einer kritischen Temperatur von über 365°C wird ein Alarmsignal ausgegeben. Gleichzeitig ist dabei auch denkbar, dass die Anlage nunmehr abgestellt wird. Sofern beispielsweise die hohe Temperatur auf schleifende Bremsbeläge zurückzuführen ist, genügt es hierbei, die Notabschaltung zu betätigen. Durch den nunmehr erfolgenden Bremsvorgang steigt die Temperatur zwar zunächst weiterhin an. Sobald die Anlage steht, kann sich die Bremsanlage aber abkühlen und die Anlage ist an einen sicheren Zustand überführt, in welchem die Bremsanlage nunmehr in Stand gesetzt werden kann.

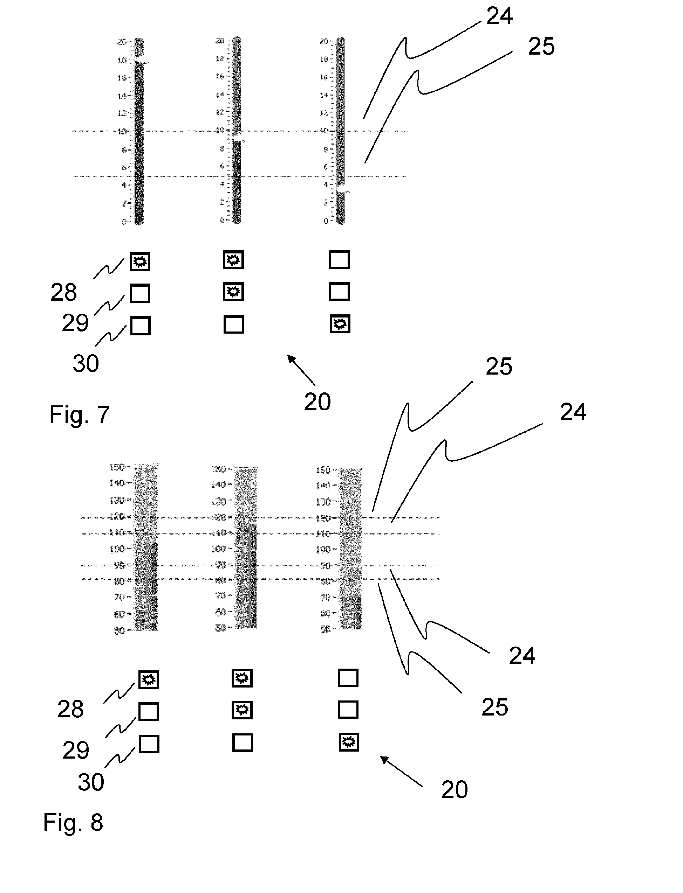

Fig. 7 zeigt, entsprechend der Darstellung in Fig. 6, das Display 20 bezogen auf die zusätzliche Überwachung der Belagstärke. Die Belagstärke wird vorzugsweise anhand der Position des Bremsbelags bzw. des Bremsbelagträgers bei betätigter Bremsvorrichtung gemessen.

Im Unterschied zu herkömmlichen Schaltern oder eingesinterten Drähten wird hier neben einer Alarmgrenze 25, die in diesem Ausführungsbeispiel bei 5 mm Restbelag liegt, bereits bei 10 mm signalisiert, dass ein Austausch des Bremsbelags fällig ist.

Als zusätzliche Sicherheit ist denkbar, die Alarmgrenze 25 derart zu definieren, dass diese primär nicht dazu dient, einen notwendigen Austausch des Bremsbelags 3 zu signalisieren, sondern dass bei Erreichen einer Mindestbelagstärke die Anlage abgeschaltet wird, um Fehlfunktionen des Bremssystems 1 und damit schlimmstenfalls eine Beschädigung einer Windkraftanlage und/oder der Bremsvorrichtung zu verhindern. Durch die gleichzeitig vorhandene Warngrenze ist sichergestellt, dass die Funktionalität einer Verschleißanzeige erhalten bleibt.

Fig. 8 zeigt, korrespondierend zu Fig. 6 und Fig. 7, ein Display 20 bzgl. des Bremsdrucks. Es sind jeweils zwei Grenzen bezogen auf einen Mindestdruck und einen Höchstdruck vorgesehen. Ein ordnungsgemäßer Anlagendruck liegt zwischen 90 und 110 bar. Bei Unter- oder Überschreitung dieses Bereiches bei Betätigung der Bremsanlage werden zunächst ein Warnsignal und sodann ein Alarmsignal, das beispielsweise auch zur Abschaltung der Anlage führen kann, erzeugt.

Fig. 9 zeigt ein Display 20, in dem mittels der Überwachungseinrichtung zusätzlich eine Druck/Verschiebungskurve aufgenommen wurde.

Kurve 23 gibt also einen Druck/(Verschiebe)Weg - Verlauf wieder. Auf der x-Achse ist der Bremsdruck in bar und auf der y-Achse die Verschiebung des Bremsbelags 3 in mm wiedergegeben. Da bei funktionierendem Bremszylinder die Kraft mit dem Druck korrespondiert, kann auch alternativ als Mittel zur Erfassung einer Betätigung und eines Lösens der Bremsvorrichtung ein Kraftsensor vorgesehen und von dem Überwachungsmodul 6 den Kraft/(Verschiebe)Weg-Verlauf überwacht werden.

Zu erkennen ist, dass bei einem Druck von in diesem Beispiel etwa 30 bar, der Bremsbelag 3 anfängt sich nach vorne zu schieben und bei etwas über 50 bar die vorderste Position erreicht hat.

Ist nun beispielsweise der Bremszylinder schwergängig, kann es passieren, dass der Bremsbelag 3 bei geöffneter Bremse nicht mehr hinreichend zurücksetzt und weiterhin anliegt. Hierdurch ändert sich der Druck/(Verschiebe)Weg-Verlauf. Auch bei anderen Fehlern, wie beispielsweise Verglasung des Bremsbelages 3 kann unter Umständen auf einen Fehler geschlossen werden.

In diesem Ausführungsbeispiel sind bzgl. des Druckwegverlaufs ebenfalls eine Warngrenze 24 und eine Alarmgrenze 25 definiert. Diese beiden Grenzen orientieren sich dynamisch an der Differenz der Position des Belages im geöffneten und im geschlossenen Zustand. Wandert mithin der Wert auf der y-Achse im geöffneten Zustand, beispielsweise aufgrund eines stärker verschlissenen Bremsbelags 3, nach oben, wird auch die Warngrenze 24 und Alarmgrenze 25 entsprechend nach oben verschoben, so dass Warn- und Alarmzustand nur generiert werden, wenn die Differenz zwischen oberstem und unterstem Wert eine vorgegebene Mindestdifferenz unterschreitet.

Durch die Erfindung konnte die Sicherheit und damit Zuverlässigkeit eines Bremssystems, insbesondere eines Bremssystems einer Windkraftanlage, erheblich verbessert werden.

## Patentansprüche

1. Bremssystem (1), insbesondere für eine Windkraftanlage, umfassend eine mechanisch mittels Reibung wirksame Bremsvorrichtung, mit zumindest einem Bremsbelag (3) und einem Bremsbelagträger,
Mittel zur Erfassung der Temperatur (8) am Bremsbelag (3) oder am Bremsbelagträger,
Mittel zur Erfassung einer Betätigung und eines Lösens der Bremsvorrichtung und Erzeugung eines Bremsbetätigungssignals und
ein Überwachungsmodul (6) zur Überwachung der Funktionsfähigkeit der Bremsvorrichtung, wobei mit dem Überwachungsmodul (6) wenigstens eine Änderung des Bremsbetätigungssignals mit einer Temperaturänderung an dem Bremsbelag (3) oder an dem Bremsbelagträger vergleichbar ist und wobei von dem Überwachungsmodul (6) unmittelbar nach der Betätigung der Bremsvorrichtung und einer gleichbleibenden oder abfallenden Temperatur an dem Bremsbelag (3) oder an dem Bremsbelagträger oder unmittelbar nach dem Lösen der Bremsvorrichtung bei einer gleichbleibenden oder steigenden Temperatur an dem Bremsbelag (3) oder an dem Bremsbelagträger ein Fehlersignal erzeugbar ist.

2. Bremssystem nach dem vorstehenden Anspruch, **dadurch gekennzeichnet, dass** das Betätigen und das Lösen der Bremsvorrichtung direkt oder indirekt erfassbar ist.

3. Bremssystem nach einem der vorstehenden Ansprüche,
**dadurch gekennzeichnet, dass** als Mittel zur Erfassung einer Betätigung und eines Lösens der Bremsvorrichtung ein Drucksensor vorgesehen ist.

4. Bremssystem nach Anspruch 3, **dadurch gekennzeichnet, dass** das Überwachungsmodul einen Hydraulikanschluss (5) und eine Druckzelle (17) zur Messung des Hydraulikdrucks aufweist.

5. Bremssystem nach einem der vorstehenden Ansprüche, **dadurch gekennzeichnet, dass** als Mittel zur Erfassung einer Betätigung und eines Lösens der Bremsvorrichtung ein Kraftsensor vorgesehen ist.

6. Bremssystem nach einem der vorstehenden Ansprüche, **dadurch gekennzeichnet, dass** als Mittel zur Erfassung einer Betätigung und eines Lösens der Bremsvorrichtung ein elektrisches Signal eines Betätigungselementes vorgesehen ist.

7. Bremssystem nach einem der vorstehenden Ansprüche, **dadurch gekennzeichnet, dass** das Überwachungsmodul an der Bremsvorrichtung angeordnetes ist, wobei das Überwachungsmodul (6) einen am Bremsbelag (3) oder Bremsbelagträger anliegenden beweglichen Tastkopf (7) aufweist.

8. Bremssystem nach einem der vorstehenden Ansprüche, **dadurch gekennzeichnet, dass** das Mittel zur Erfassung der Temperatur als ein Temperatursensor (8) ausgebildet ist, welches vorzugsweise an dem beweglichen Tastkopf (7) angebracht ist.

9. Bremssystem nach einem der vorstehenden Ansprüche,
**dadurch gekennzeichnet, dass** das Überwachungsmodul (6) einen Abstandssensor(14) aufweist, vorzugsweise einen induktiven Abstandssensor (14), wobei mit dem Abstandssensor (14) ein Verschiebung des Bremsbelags (3) oder des Bremsbelagträgers erfassbar ist.

10. Bremssystem nach Anspruch 9, **dadurch gekennzeichnet, dass** das Überwachungsmodul einen mit dem beweglichen Tastkopf (7) verbundenen Keil (13) aufweist, wobei eine Verschiebung des Tastkopfes (7) über den Abstandsensor (14), mittels dessen der Abstand zum Keil (13) messbar ist, bestimmbar ist.

11. Bremssystem nach einem der Ansprüche 9 oder 10, **dadurch gekennzeichnet, dass** eine Auswerteeinheit vorgesehen ist, welches Mittel zum Vergleich der Verschiebung des Bremsbelags (3) oder des Bremsbelagträgers mit einem Referenzwert aufweist.

12. Bremssystem nach Anspruch 11, **dadurch gekennzeichnet, das** mit der Auswerteeinheit Mitteln zumindest zwei Warngrenzen (24) ausgebbar sind.

13. Bremssystem nach einem der vorstehenden Ansprüche,
**dadurch gekennzeichnet, dass** das Bremssystem Mittel zur Alarmierung an einer Anlage, insbesondere an einer Windkraftanlage und / oder Mittel zur Notabschaltung der Anlage aufweist, wobei wenigstens aus dem Fehlersignal ein Alarmsignals erzeugbar ist und vorzugsweise bei Vorhandensein des Fehlersignals die Anlage abschaltbar ist.

14. Verfahren zur Überwachung eines Bremssystems, insbesondere für eine Windkraftanlage, mit einer mechanischen mittels Reibung wirksame Bremsvorrichtung, mit zumindest einem Bremsbelag (3) und einem Bremsbelagträger, mit den folgenden Verfahrensschritten:
- Erfassung der Temperatur am Bremsbelag (3) oder am Bremsbelagträger;
- Erfassung einer Betätigung und eines Lösens der Bremsvorrichtung;
- Erzeugung eines Bremsbetätigungssignals;
- Vergleich einer Änderung des Bremsbetätigungssignals mit einer Temperaturänderung an dem Bremsbelag oder an dem Bremsbelagträger;
- Erzeugung eines Fehlersignals falls unmittelbar nach der Betätigung der Bremsvorrichtung eine gleichbleibende oder abfallende Temperatur an dem Bremsbelag (3) oder an dem Bremsbelagträger oder falls unmittelbar nach dem Lösen der Bremsvorrichtung eine gleichbleibende oder steigende Temperatur an dem Bremsbelag (3) oder an dem Bremsbelagträger erkennbar ist.

15. Verfahren zur Überwachung eines Bremssystems, Bremssystem nach Anspruch 14, **dadurch gekennzeichnet, dass** eine Verschiebung des Bremsbelags (3) oder des Bremsbelagträgers erfasst und über ein Zeitintervall ausgewertet wird, wobei ein weiteres Fehlersignal erzeugt wird, falls in dem Zeitintervall die Verschiebung des Bremsbelags (3) oder des Bremsbelagträgers gleich Null ist.
